# EUROPEAN PATENT SPECIFICATION

(11) **EP 3 746 863 B1**
(45) Date of publication and mention of the grant of the patent: **25.08.2021**
(21) Application number: 18833177.1
(22) Date of filing: 14.12.2018
(51) Int. Cl.: G05G 1/08, H01H 25/06, F16K 31/60, F16K 35/02

(54) **CONTROL UNIT WITH CONCENTRIC ADJUSTING KNOB**
STEUERUNGSEINHEIT MIT KONZENTRISCHEM VERSTELLKNOPF
UNITÉ DE COMMANDE DOTÉE D'UN BOUTON DE RÉGLAGE CONCENTRIQUE

(30) Priority: 01.02.2018 DE 102018000811
(43) Date of publication of application: 09.12.2020
(73) Proprietor: HUSQVARNA AB, 561 82 Huskvarna (SE)
(72) Inventor: KAUPP, Rainer, 89143 Blaubeuren (DE)
(74) Representative: Finkele, Rolf
(86) International application number: PCT/EP2018/084938
(87) International publication number: WO 2019/149422

(56) References cited:
- DE-A1-102007 035 564

## Description

### TECHNICAL FIELD

The present disclosure relates to water computers. More specifically, the present disclosure relates to a control unit which makes use of concentric adjusting knobs for varying different parameters controlled by the water computers.

### BACKGROUND

Water computers (also referred to as water distributors) are used for controlling different parameters of water systems in outdoor applications. Generally, the water computers are provided with a control unit which acts as an interface for a user. Further, the control unit usually has multiple adjustment knobs, with each of the multiple adjustment knobs programmed to adjust value of a parameter operated by the water computers.

However, there have been instances when operation of one adjustment knob disturbs values pre-set by any other adjustment knob of the multiple adjustment knobs. This can usually happen with "double-knob" type of adjustment knobs where the adjustment knobs are arranged such that there may be inadvertent adjustment while engaging with only one of the adjustment knobs of the control unit.

An example of an interface such as a vehicle air-conditioning unit is provided by EP0795807 (hereinafter referred to as '807 reference). The '807 reference provides a control unit that includes a rotary knob for air quantity adjustment provided concentrically with a rotary knob for temperature adjustment. The rotary knob for temperature can usually be retracted with respect to the rotary knob for air quality and being movable to a projecting position. However, '807 reference does not disclose a means which allows locking of one set of the rotary knob while operating another set of the rotary knob. This can lead to undesirable change in parameters while engaging with only one rotary knob.

Another example is provided by DE102007035564 (hereinafter referred to as '564 reference. The '564 reference discloses operating means for operating a plurality of functions in a vehicle. An operation member has a plurality of coaxial rotary plates. Each rotary plate has a inner rotation body and an outer rotation body. Further, an annular display member is provided for optical display of the respective rotating bodies associated with the control information. The annular display member coaxially surrounds the associated rotary member.

Thus, there is a need of an improved arrangement of adjustment knobs of the control unit to avoid any undesirable operation of any of the adjustment knobs.

### SUMMARY

In view of the above, it is an objective of the present invention to solve or at least reduce the drawbacks discussed above. The objective is at least partially achieved by a control unit according to claim 1. The control unit includes at least an inner knob configured to adjust a first parameter controlled by the control unit. Further, the inner knob moves between a first position and a second position. The control unit includes an outer knob configured to adjust a second parameter controlled by the control unit. The outer knob is present concentrically around the inner knob. Moreover, the first position of the inner knob is defined as a projected position relative to the outer knob, and the second position of the inner knob is defined as a retracted position relative to the outer knob. When the inner knob is in the first position, the outer knob is locked for adjustment of the second parameter.

According to the present invention, the inner knob is locked for adjustment of the first parameter in the second position of the inner knob. This avoids any inadvertent adjustment of the first parameter while the inner know remains in the second position. But, adjustment to the second parameters can be made by the outer know even as the inner knob is locked.

According to an embodiment of the present invention, movement of the inner knob between the first position and the second position is effectuated by applying a push force to the inner knob. This provides convenience of operation of the inner knob by application of the push force.

According to an embodiment of the present invention, the control unit is configured to control a water distributor. The water distributor can be controlled as desired using position-based-locking feature of the inner knob and the outer knob.

According to an embodiment of the present invention, the control unit is configured to control a water computer. The control unit allows desired control of the water computer, particularly by change of position of the inner knob which also has a relation with working of the outer knob.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1A** shows a cross-sectional view of a control unit with an inner knob in a first position, in accordance with an embodiment of the present invention;
**FIG. 1B** shows a front view of the control unit with the inner knob in the first position, in accordance with an embodiment of the present invention;
**FIG. 1C** shows a cross-sectional view of the control unit with the inner knob in the first position, in accordance with an embodiment of the present invention;
**FIG. 1D** shows a perspective view of the control unit with the inner knob in the first position, in accordance with an embodiment of the present invention;
**FIG. IE** shows a top view of the control unit with the inner knob in the first position, in accordance with an embodiment of the present invention;
**FIG. 2A** shows a cross-sectional view of the control unit with the inner knob in a second position, in accordance with an embodiment of the present invention;
**FIG. 2B** shows a front view of the control unit with the inner knob in the second position, in accordance with an embodiment of the present invention;
**FIG. 2C** shows a cross-sectional view of the control unit with the inner knob in the second position, in accordance with an embodiment of the present invention;
**FIG. 2D** shows a perspective view of the control unit with the inner knob in the second position, in accordance with an embodiment of the present invention;
**FIG. 2E** shows a top view of the control unit with the inner knob in the second position, in accordance with an embodiment of the present invention;
**FIG. 3A** shows a perspective view of the control unit with the inner knob in the second position, in accordance with an embodiment of the present invention;
**FIG. 3B** shows a side view of the control unit with the inner knob in the second position, in accordance with an embodiment of the present invention;
**FIG. 4A** shows a perspective view of the control unit with the inner knob in the first position, in accordance with an embodiment of the present invention; and
**FIG. 4B** shows a side view of the control unit with the inner knob in the first position, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

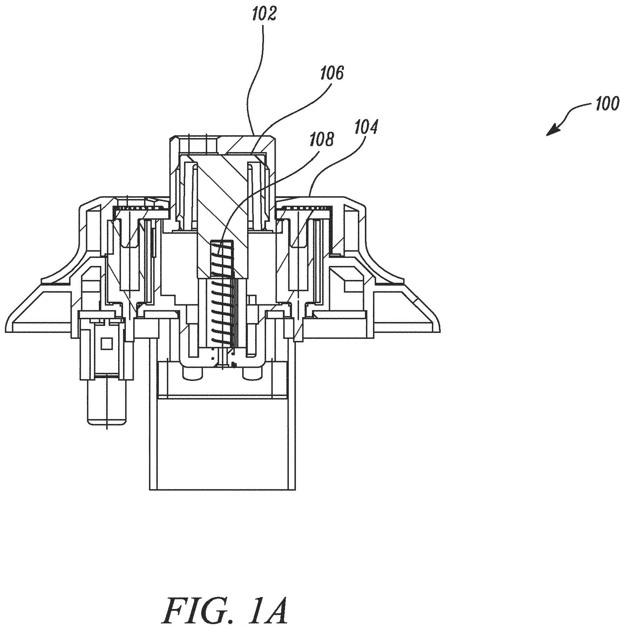

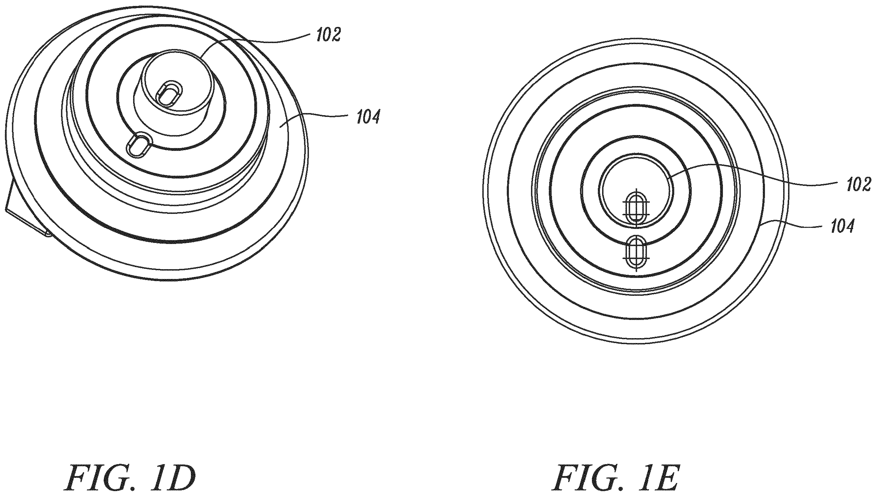

**FIG. 1A** illustrates a cross-sectional view of a control unit **100.** The control unit 100 of the present disclosure makes reference to a water computer or a water distributor for implementation. However, the present disclosure can be readily implemented for any system which requires control of one or more parameters by a control unit as will be appreciated by a person having ordinary skill in the art.

The control unit **100** includes an inner knob **102** which is shown here in a first position. The inner knob **102** is used to adjust a first parameter controlled by the control unit **100.** Moreover, the inner knob **102** can be used to adjust the first parameter in the first position only. This prevents any inadvertent use of the inner knob **102,** and as a result adjustment of the first parameter when it is not desired. The control unit **100** includes an outer knob **104** to adjust a second parameter controlled by the control unit **100.** The outer knob **104** is provided concentrically around the inner knob **102.** However, the outer knob **104** and the inner knob **102** may be arranged in any other relative configuration for application of the present disclosure.

During adjustment of the first parameter, the inner knob **102** may be rotated along its vertical axis. Further, there can be indicators/markings with the inner knob **102** to act as reference for change in magnitude of the first parameter. Similarly, indicators/markings can be provided with the outer knob **104** to act as reference for change in magnitude of the second parameter. The outer knob **104** can be rotated along its vertical axis, independently of the inner knob **102.** This leads to adjustment of the second parameter. Thus, the first parameter and the second parameter can be independently adjusted.

The control unit **100** further includes a locking device **106** which locks the outer knob **104** and/or the inner knob **102** depending upon position of the inner knob **102.** In some embodiments, this allows locking of adjustment of one parameter (i.e. the second parameter) while the other parameter (i.e. the first parameter) undergoes suitable adjustment as desired. Moreover, the control unit **100** includes a spring **108** to guide movement of the inner knob **102** between the first position and the second position, which is expected to take place on application of an external push action on the inner knob **102.**

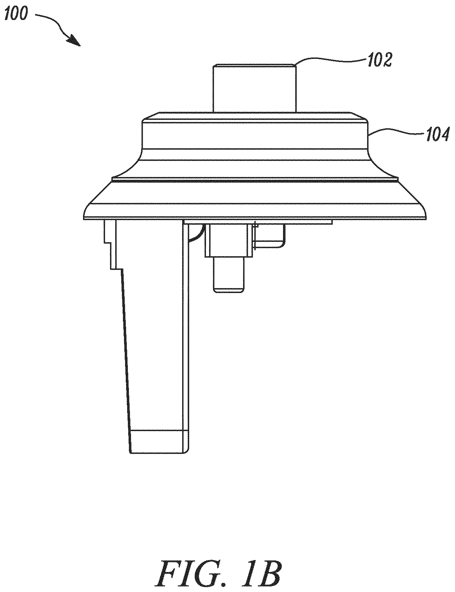

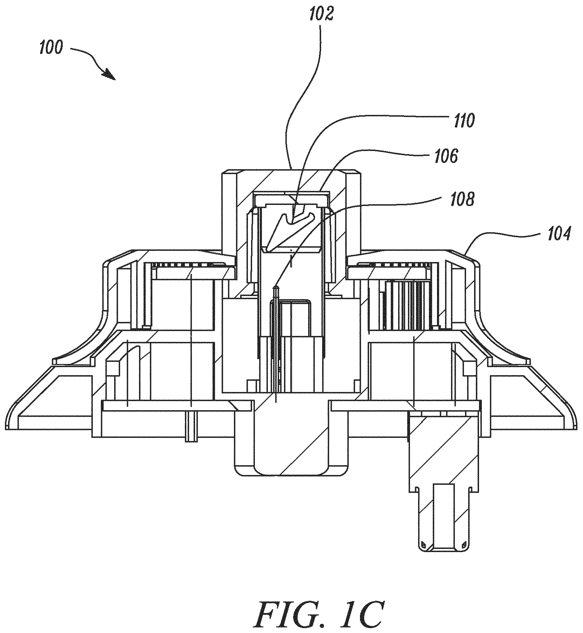

**FIG. 1B** and **FIG. 1C** illustrate different views of the control unit **100** with the inner knob **102** in the first position. **FIG. 1C****,** in particular, shows location of the locking device **106** which further includes a locking contour **110** and the spring **108** inside the inner knob **102.** The locking contour **110** can lock the inner knob **102** or the outer knob **104** depending upon position of the inner knob **102.** Further, the locking contour **110** checks any inadvertent movement of the inner knob **102** in absence of any push force. The first position of the inner knob **102** may be defined as a projected position relative to the outer knob **104.** This allows ease of engagement with the inner knob **102** so as to make desired adjustments to the first parameter.

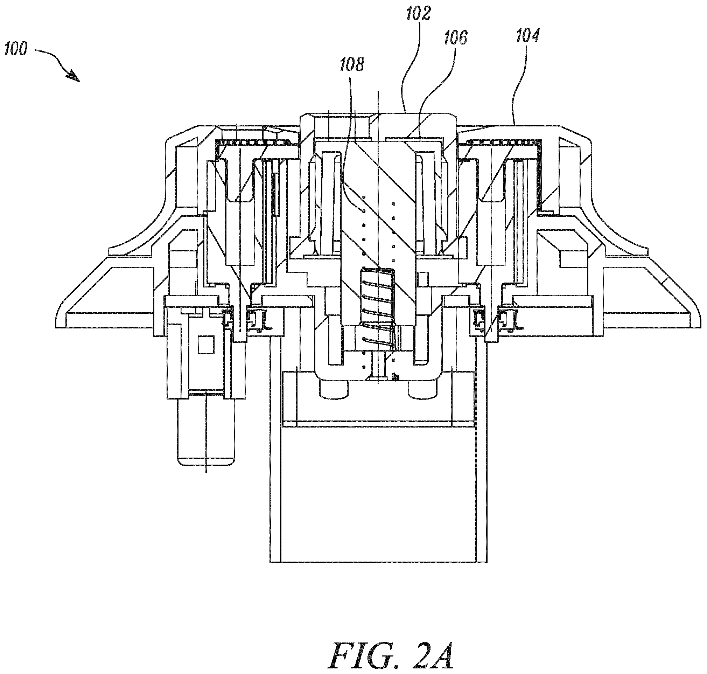

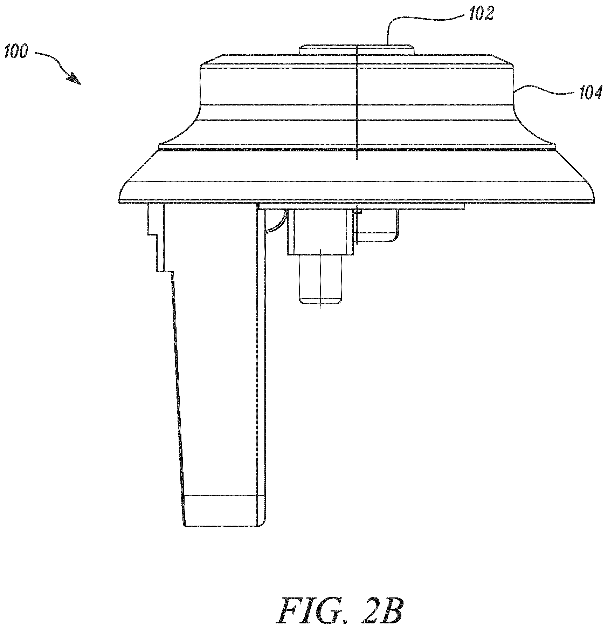

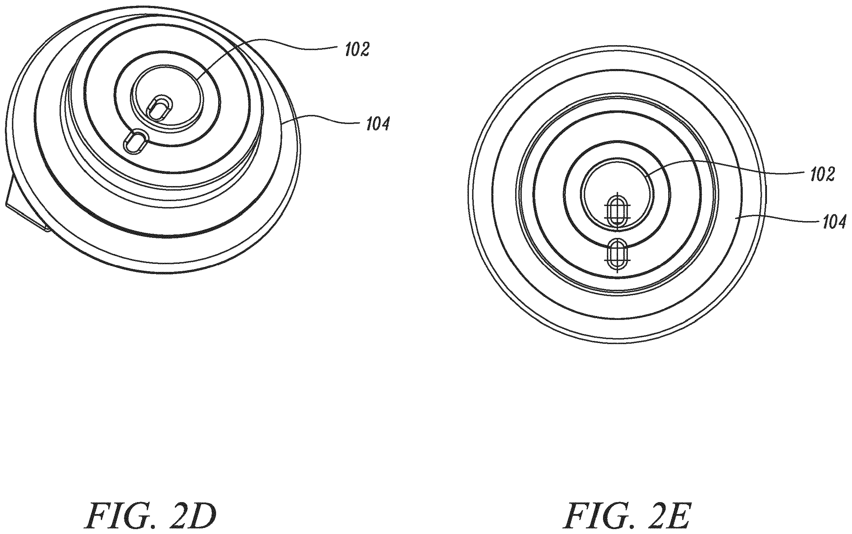

When the inner knob **102** is in the first position, the outer knob **104** is locked for adjustment of the second parameter. **FIG. 1D** and **FIG. IE** illustrate views from top of the control unit **100** with the inner knob **102** in the first position. The changeover of the inner knob **102** which moves from the first position to the second position is shown with **FIGS. 2A****,** **2B****,** and **2D****.**

**FIG. 2A** illustrates a cross-sectional view of the control unit **100** with the inner knob **102** in the second position. This position (i.e. the second position) leads to locking of the inner knob **102** and allows adjustment of the second parameter by the outer knob **104.** The second position of the inner knob **102** may be defined as a retracted position relative to the outer knob **104.** Thus, the inner knob **102** is locked for adjustment of the first parameter in the second position of the inner knob **102** as desired in cases of "double-knob" arrangement provided by the present disclosure.

In an embodiment, movement of the inner knob **102** between the first position and the second position is effectuated by applying a push force to the inner knob **102.** The push force may be pre-set depending upon the material/weight/type of the control unit **100** or any component thereof. Further, the control unit **100** may be programmed such that a single instance application of the push force to the inner knob **102** moves it to the second position and a double instance of application of the push force moves the inner knob **102** to the second position or vice-versa. The spring **108** housed inside the inner knob **102** guides the movement of the inner knob **102** between the first position and the second position and stores the push force for effectuating such movements of the inner knob **102.**

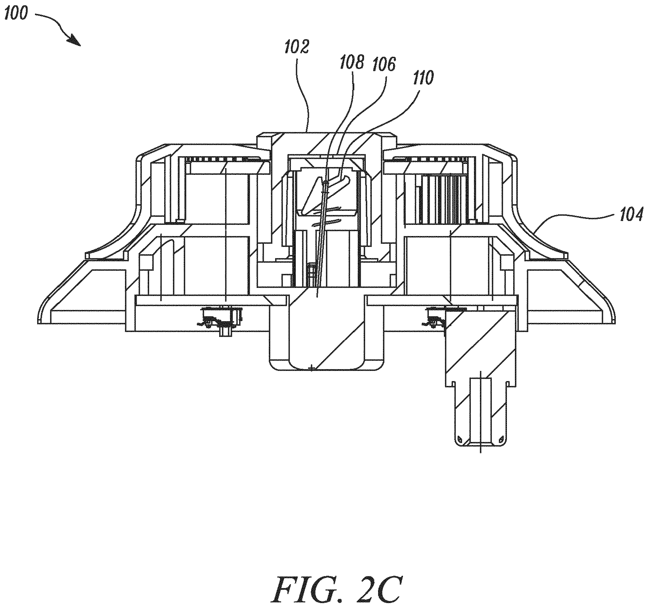

**FIG. 2B** and **FIG. 2C** illustrate different views of the control unit **100** with the inner knob **102** in the second position. Further, **FIGS. 2D** and **FIG. 2E** illustrate views from top of the control unit **100** with the inner knob **102** in the second position. The inner knob **102** is practically inaccessible in the second position t and as a result, only allows adjustment by the outer knob **104** which controls the second parameter of the control unit **100.**

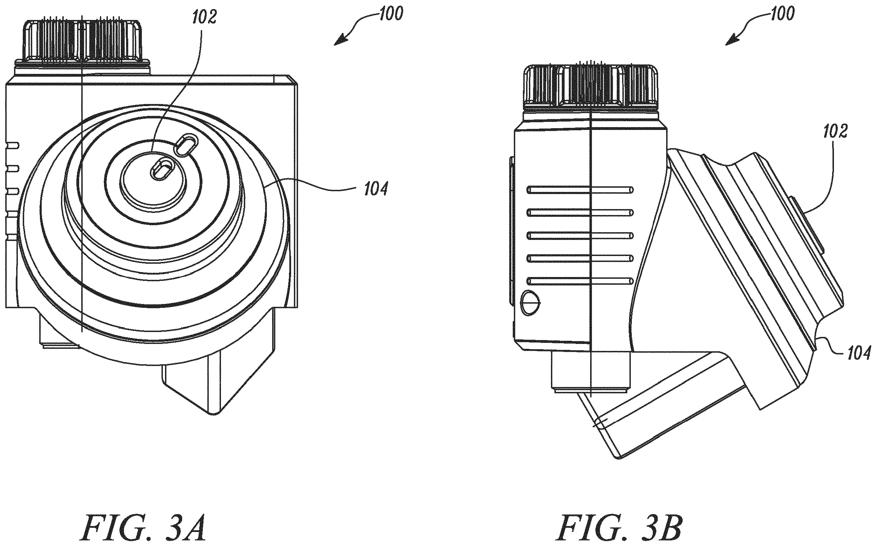

The control unit **100** of the present disclosure controls a water distributor, or a water computer as illustrated by different views of **FIG. 3A** and **FIG. 3B****.** Here, the control unit **100** is shown with the inner knob **102** in the second position. The inner knob **102** stays in this position as long as no external push force is applied on the inner knob **102.** The present figures illustrate only the major components such as the inner knob **102** and the outer knob **104** from aesthetical and clarity considerations although there will be other components such as valve, seals among others of the control unit **100** as will be appreciated by a person having ordinary knowledge in the art.

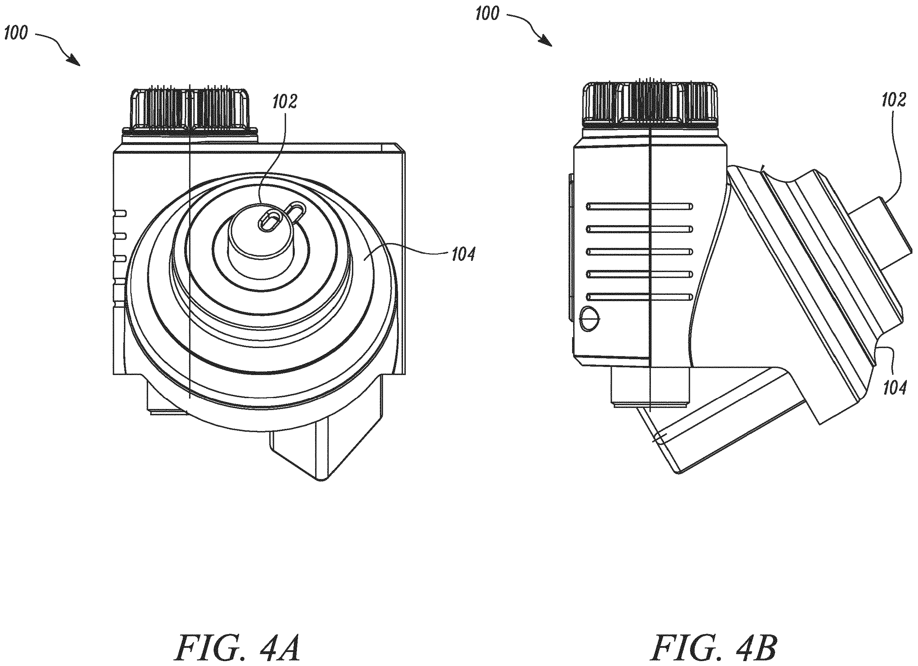

Now, in order to make any adjustment by the inner knob **102** which remains locked in the second position of the inner knob **102,** the push force is applied. The push force moves the inner knob **102** to the first position (from the second position as shown earlier) and allows adjustment to the first parameter. **FIG. 4A** and **FIG. 4B** illustrate different views of the control unit **100** with the inner knob **102** again moved to the first position. Further, the inner knob **102** and/or the outer knob **104** is provided with means to monitor and notify for events where any undesired adjustment is solicited during locked stage of any of them. For example, when the inner knob **102** is in the first position (as in the current case), the outer knob **104** remains locked for adjustment of the second parameter. However, in case of negligence on the part of a common user there may be forced engagement with the outer knob **104** (currently locked) leading to possible damage. So, the control unit **100** may prevent this damage by timely notification to the common user regarding the state of the inner knob **102** and/or the outer knob **104** and any further information, if warranted/queried by the common user. This feature is expected to extend the life of the control unit **100** and prove beneficial during maintenance of the control unit **100.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Control Unit
- **102**: Inner Knob
- **104**: Outer Knob
- **106**: Locking Device
- **108**: Spring
- **110**: Locking Contour

## Claims

1. A control unit **(100)** comprising at least:
an inner knob **(102)** configured to adjust a first parameter controlled by the control unit **(100),** wherein the inner knob **(102)** is adapted to move between a first position and a second position; and
an outer knob **(104)** configured to adjust a second parameter controlled by the control unit **(100),** wherein the outer knob **(104)** is disposed concentrically around the inner knob **(102);**
wherein the first position of the inner knob **(102)** is defined as a projected position relative to the outer knob **(104),** and the second position of the inner knob **(102)** is defined as a retracted position relative to the outer knob **(104);**
wherein when the inner knob **(102)** is in the first position, the outer knob **(104)** is locked for adjustment of the second parameter
and wherein when the inner knob (102) is in the second position the inner knob (102) is locked, the second position of the first knob (102) allowing adjustment of the second parameter by the outer knob (104),
**characterised in that** the inner knob (102) and/or the outer knob (104) further includes:
means to monitor and notify for events where any undesired adjustment is solicited during the locked state of the inner knob (102) or the outer knob (104).

2. The control unit **(100)** of claim **1,** wherein the inner knob **(102)** is locked for adjustment of the first parameter in the second position of the inner knob **(102).**

3. The control unit **(100)** of claim **1,** wherein movement of the inner knob **(102)** between the first position and the second position is effectuated by applying a push force to the inner knob **(102).**

4. The control unit **(100)** of claim **1** to **3,** wherein the control unit **(100)** is configured to control a water distributor.

5. The control unit **(100)** of claim **1** to **3,** wherein the control unit **(100)** is configured to control a water computer.

## Patentansprüche

1. Steuereinheit (100), welche wenigstens umfasst:
einen inneren Knopf (102), der konfiguriert ist, um einen ersten Parameter, der von der Steuereinheit (100) gesteuert wird, einzustellen, wobei der innere Knopf (102) angepasst ist, um sich zwischen einer ersten Position und einer zweiten Position zu bewegen; und
einen äußeren Knopf (104), der konfiguriert ist, um einen zweiten Parameter einzustellen, der von der Steuereinheit (100) gesteuert wird, wobei der äußere Knopf (104) konzentrisch um den inneren Knopf (102) herum angeordnet ist;
wobei die erste Position des inneren Knopfes (102) als relativ zum äußeren Knopf (104) projizierte Position definiert ist und die zweite Position des inneren Knopfes (102) als relativ zum äußeren Knopf (104) eingezogene Position definiert ist;
wobei, wenn sich der innere Knopf (102) in der ersten Position befindet, der äußere Knopf (104) zum Einstellen des zweiten Parameters verriegelt ist, und wobei, wenn der innere Knopf (102) in der zweiten Position ist, der innere Knopf (102) verriegelt ist, wobei die zweite Position des ersten Knopfes (102) die Einstellung des zweiten Parameters durch den äußeren Knopf (104) ermöglicht,
**dadurch gekennzeichnet, dass** der innere Knopf (102) und/oder der äußere Knopf (104) weiterhin Folgendes umfassen:
Mittel zum Überwachen und Benachrichtigen von Ereignissen, bei denen eine unerwünschte Einstellung während des verriegelten Zustands des inneren Knopfes (102) oder des äußeren Knopfes (104) angefordert wird.

2. Steuereinheit (100) nach Anspruch 1, wobei der innere Knopf (102) zum Einstellen des ersten Parameters in der zweiten Position des inneren Knopfes (102) verriegelt ist.

3. Steuereinheit (100) nach Anspruch 1, wobei die Bewegung des inneren Knopfes (102) zwischen der ersten Position und der zweiten Position durch Aufbringen einer Druckkraft auf den inneren Knopf (102) bewirkt wird.

4. Steuereinheit (100) nach Anspruch 1 bis 3, wobei die Steuereinheit (100) konfiguriert ist, um einen Wasserverteiler zu steuern.

5. Steuereinheit (100) nach Anspruch 1 bis 3, wobei die Steuereinheit (100) konfiguriert ist, um einen Wassercomputer zu steuern.

## Revendications

1. Unité de commande (100) comprenant au moins :
un bouton intérieur (102) configuré pour régler un premier paramètre contrôlé par l'unité de commande (100), dans laquelle le bouton intérieur (102) est apte à se déplacer entre une première position et une deuxième position ; et
un bouton extérieur (104) configuré pour régler un deuxième paramètre contrôlé par l'unité de commande (100), dans laquelle le bouton extérieur (104) est disposé de manière concentrique autour du bouton intérieur (102) ;
dans laquelle la première position du bouton intérieur (102) est définie comme une position saillante par rapport au bouton extérieur (104), et la deuxième position du bouton intérieur (102) est définie comme une position rétractée par rapport au bouton extérieur (104) ;
dans laquelle lorsque le bouton intérieur (102) est dans la première position, le bouton extérieur (104) est verrouillé pour un réglage du deuxième paramètre et dans laquelle lorsque le bouton intérieur (102) est dans la deuxième position, le bouton intérieur (102) est verrouillé, la deuxième position du premier bouton (102) permettant un réglage du deuxième paramètre de la part du bouton extérieur (104),
**caractérisée en ce que** le bouton intérieur (102) et/ou le bouton extérieur (104) inclut en outre :
des moyens pour surveiller et notifier des événements où tout réglage non désiré est sollicité lors de l'état verrouillé du bouton intérieur (102) ou du bouton extérieur (104).

2. Unité de commande (100) de la revendication 1, dans laquelle le bouton intérieur (102) est verrouillé pour un réglage du premier paramètre dans la deuxième position du bouton intérieur (102).

3. Unité de commande (100) de la revendication 1, dans laquelle un mouvement du bouton intérieur (102) entre la première position et la deuxième position est effectué en appliquant une force de poussée au bouton intérieur (102).

4. Unité de commande (100) de la revendication 1 à 3, dans laquelle l'unité de commande (100) est configurée pour contrôler un répartiteur d'eau.

5. Unité de commande (100) de la revendication 1 à 3, dans laquelle l'unité de commande (100) est configurée pour contrôler un programmateur d'arrosage.
